# EUROPEAN PATENT APPLICATION

(11) **EP 2 509 273 A1**
(43) Date of publication of application: **10.10.2012**
(21) Application number: 09852726.0
(22) Date of filing: 30.12.2009
(51) Int. Cl.: H04L 29/06

(54) **METHOD AND SYSTEM FOR UPDATING NETWORK TOPOLOGY IN MULTI-PROTOCOL LABEL SWITCHING SYSTEM**

(71) Applicant: ZTE Corporation, Shenzhen, Guangdong 518057 (CN)
(72) Inventor: CHEN, Qiaogang, Guangdong 518057 (CN); YANG, Jian, Guangdong 518057 (CN); NIAN, Qingfei, Guangdong 518057 (CN)
(74) Representative: Price, Nigel John King
(86) International application number: PCT/CN2009/076231
(87) International publication number: WO 2011/079441

(57) **Abstract**

A method for updating a network topology in a multi-protocol label switching system includes that network management system obtains network topology data from a node, then judges whether the current network topology is changed, and when changed, update the local network topology data with the network topology data. A corresponding system is also provided, including an obtaining unit to obtain network topology data from a node, a judgment unit to judge whether the current network topology is changed according to the network topology data and to trigger the update unit when it is changed, and a update unit to update the network topology data in the network management system with the network topology data. In the disclosure, the reality of the Multi-Protocol Label Switching Transport Profile (MPLS-TP) network topology is greatly improved, and it is more convenient and accurate when the network management system is utilized to perform network management.

## Description

### TECHNICAL FIELD

The disclosure relates to the network topology update techniques, and in particular to a method and system for updating a network topology in a Multi-Protocol Label Switching (MPLS) system.

### BACKGROUND

A communication network consists of many network nodes, which are also called network elements. The network elements are connected via communication lines, such as optical fiber cables. The network elements are distributed in various physical regions, some of them may be distributed in communication buildings in the urban, while others may be distributed in remote regions. The network elements in the communication network need configuration, maintenance and monitoring. Due to the distributed feature of the network elements, it is impossible, for the network elements at each location, to have someone attend them. In this case, a central network management system is required to be placed in a central computer room to configure, maintain and monitor each node in the network by means of remote communication.

At present, in the existing communication networks, networks employing Synchronous Digital Hierarchy (SDH) and Wavelength Division Multiplexing (WDM) techniques have been provided with ready-made management systems and methods. With the continuous development of the techniques, a lot of new communication techniques appear, among which, MPLS Transport Profile (MPLS-TP) is a connection-oriented packet interaction technique. From now on, management of the communication network of MPLS-TP will become an important part of the network management system.

In the network management system, an important management function is to present the network topology, including connection from a node, protection relation of the connection or the like, to the administrator. The connection does not mean simple connection relation of physical cables only, but the topology for each layer must be displayed, so that the user can see a clear view on different layers.

In the present networks, topology data are configured statically. As a communication network is extremely huge, thousands of nodes, and even tens of thousands of nodes may be involved, the internal constitution of nodes is also extremely complicated, and the involved data volume is also extremely huge. Due to the huge data volume, the burden of the computation and the network management traffic is very high, which could easily lead to abnormalities, such as computation error, data loss, success of parts of mass commands and failure of parts of mass commands. Therefore, the communication requirements of the network cannot be satisfied by determining topology data according to statically configured data, and it is necessary to ensure that the network topology can reflect the true network in time and the change of the actual network topology will be quickly reflected on the network management system.

### SUMMARY

In view of the above, the main purpose of the disclosure is to provide a method and system for updating a network topology in an MPLS system, so that the network topology can be obtained by the network management system in time when the topology in the current network is changed, thus bringing great convenience to the maintenance of the MPLS system.

To achieve the above purpose, the technical solution of the disclosure is implemented as follows.

A method for updating a network topology in a multi-protocol label switching system includes:
a network management system obtaining network topology data from a node, then judging whether the current network topology is changed, and updating the local network topology data with the network topology data when the current network topology is changed.

Preferably, the network management system obtaining network topology data from the node includes:
the node sending its own current network topology data to the network management system when determining that the network topology is changed.

Preferably, the change of the network topology includes:
a new node accessing the network or decreasing of a number of the nodes in the network; or
increasing or deleting of connections in the network or changing of routing information; or
changing of type or state of a protected link in the network.

Preferably, the network management system obtaining the network topology data from the node includes:
the network management system sending a query request for the network topology data to a node, and the node reporting its own current network topology data in response to the query request.

Preferably, the network topology data includes at least one of the following data: local node identification (ID), local node address, local Label Switch Router (LSR) ID, local LSR address, service layer connection point ID corresponding to the local node, neighbor node ID, neighbor node address, neighbor LSR ID, neighbor LSR address, and service layer connection point ID corresponding to the neighbor node; or
the network topology data includes at least one of the following data: label switching path (LSP) ID, local LSR ID, neighbor LSR ID, and label; or
the network topology data includes at least one of the following data: protected group ID, working LSP ID, protected LSP ID, neighbor LSR ID in the protected group, protection type, and current protection condition.

Preferably, the network topology data includes at least one of the following data: local node ID, local node address, local provider edge (PE) router ID, local PE router address, service layer connection point ID corresponding to the local node, neighbor node ID, neighbor node address, neighbor PE router ID, neighbor PE router address, and service layer connection point ID corresponding to the neighbor node; or
the network topology data includes at least one of the following data: pseudowire (PW) ID, local PE ID, and neighbor PE ID.

A system for updating network topology in a multi-protocol label switching system includes an obtaining unit, a judgment unit and an update unit; wherein:
the obtaining unit is configured to obtain network topology data from a node;
the judgment unit is configured to judge whether the current network topology is changed, and to trigger the update unit when the current network topology is changed;
the update unit is configured to update the local network topology data in the network management system with the network topology data.

Preferably, the system further includes a determination unit and a first sending unit; wherein:
the determination unit is configured to determine whether the network topology is changed, and to trigger the first sending unit when the network topology is changed; and
the first sending unit is configured to send the current network topology data of nodes to the obtaining unit.

Preferably, the change of the network topology includes:
a new node accessing the network or decreasing of a number of the nodes in the network; or
increasing or deleting of connections in the network or changing of routing information; or
changing of type or state of a protected link in the network.

Preferably, the system further includes a second sending unit and a reporting unit, wherein
the second sending unit is configured to send a query request for the network topology data to a node;
the reporting unit is configured to report the current network topology data of a node in response to the query request.

Preferably, the network topology data includes at least one of the following data: local node identification (ID), local node address, local label switching router (LSR) ID, local LSR address, service layer connection point ID corresponding to the local node, neighbor node ID, neighbor node address, neighbor LSR ID, neighbor LSR address, and service layer connection point ID corresponding to the neighbor node; or
the network topology data includes at least one of the following data: label switching path (LSP) ID, local LSR ID, neighbor LSR ID, and label; or
the network topology data includes at least one of the following data: protected group ID, working LSP ID, protected LSP ID, neighbor LSR ID in the protected group, protection type, and current protection condition.

Preferably, the network topology data includes at least one of the following data: local node ID, local node address, local provider edge (PE) router ID, local PE router address, service layer connection point ID corresponding to the local node, neighbor node ID, neighbor node address, neighbor PE router ID, neighbor PE router address, and service layer connection point ID corresponding to the neighbor node;
or, the network topology data includes at least one of the following data: pseudowire (PW) ID, local PE ID, and neighbor PE ID.

In the disclosure, a node, when determining that the current network topology is changed, or receiving a topology data query request from the network management system, sends the current network topology data to the network management system, and the network management system updates the local network topology data with these network topology data. In this way, it can be assured that the network topology data stored in the network management system is a relatively new network topology in the current network, so that the truth of the MPLS-TP network topology is greatly improved; it is more convenient and accurate when the network management system is utilized to perform network management, and the friendliness and convenience of the administrator in using the network management system is extremely improved.

### BRIEF DESCRIPTION OF THE DRAWINGS

Fig. 1 is a flow chart of a method for updating a network topology in an MPLS system according to the disclosure; and
Fig. 2 is a structure schematic view of a system for updating a network topology in an MPLS system according to the disclosure.

### DETAILED DESCRIPTION

To make the object, technical solutions and advantages of the disclosure more clear, the disclosure will be further described in details below by illustrating the embodiments with reference to the drawings.

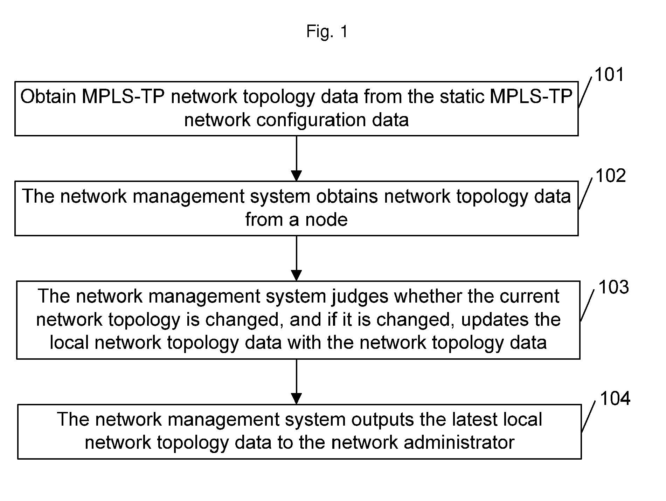

Fig. 1 is a flow chart of a method for updating a network topology in an MPLS system according to the disclosure. As shown in Fig. 1, the method for updating the network topology in the MPLS system according to the disclosure includes the following steps:
Step 101: MPLS-TP network topology data are obtained from the static MPLS-TP network configuration data.

The network administrator creates MPLS-TP network element objects one by one in a network management system he/she uses, and each network element represents a network node device. The administrator configures wirings and corresponding services for the MPLS-TP network elements, that is, configures line connections. A configuration module in the network management system processes requests from the network administrator, and issues, after the network administrator completes configurations, the configurations to the respective network element to perform the respective configurations. According to the configuration response message from each network element, the network management system stores the current topology data of each network element in the network into a database.

For the Label Switching Path (LSP) layer, these data include at least one of:
identifications (IDs) of a node and its neighbor nodes, addresses of the node and its neighbor nodes, Label Switch Router (LSR) IDs of the node and its neighbor nodes, LSR addresses of the node and its neighbor nodes, a service layer connection point ID corresponding to the node and its neighbor nodes; or
the network topology data includes at least one of LSP ID, local LSR ID and neighbor LSR ID; or
the network topology data includes at least one of protected group ID, working LSP ID, protected LSP ID, neighbor LSR ID in the protected group, protection type, and current protection condition.

For the Pseudowire (PW) layer, the network topology data includes at least one

IDs of a node and its neighbor nodes, addresses of the node and its neighbor nodes, local and neighbor provider edge (PE) router IDs, local and neighbor PE router addresses, and service layer connection point ID corresponding to the local and neighbor nodes; or
the network topology data includes at least one of PW ID, local LSR ID and neighbor LSR ID.

Step 102: the network management system obtains network topology data from a node.

In the disclosure, the network management system may obtain network topology data from a node in the following two ways.

First: a node notifies the network management system after discovering the change of the MPLS-TP network topology.

The network elements report a notification to the network management system when discovering the following several events:
1) a new neighbor (node) appears; 2 the number of the existing neighbors decreases; 3) an existing connection is deleted; 4) an existing connection changes; 5) a new connections appears; 6) the protection type of the protected group to which a connection belongs changes; and 7) the protection condition of the protected group to which a connection belongs changes.

After receiving the notification, the network management system updates the current MPLS-TP network topology data in the network management system according to the latest MPLS-TP network topology data uploaded by the node. Of course, as an implementing means, even if the network management system receives network topology data actively reported by a node, the network management system still compares the network topology data with the locally-stored current MPLS-TP network topology data to judge whether they are consistent.

If the network administrator is opening the MPLS-TP network topology view for monitoring, the network management system updates the view with the latest MPLS-TP network topology data; in this way, the network administrator will obtain the current latest network topology data in time.

Second: the network management system regularly checks the consistency of the MPLS-TP network topology data.

The network management system sends a query request to the nodes regularly, to query the state of the MPLS-TP network topology data. The network management system compares the local MPLS-TP network topology data with the response of the nodes, to check whether the local MPLS-TP network topology data is consistent to the topology data on the nodes.

If the network management system finds that the locally stored MPLS-TP network topology data is not consistent to that reported by the network elements, the network management system will update the local MPLS-TP network topology data with the MPLS-TP network topology data reported by the network elements.

If the network administrator is opening the MPLS-TP network topology view for monitoring, the network management system will update the view with the latest MPLS-TP network topology data; in this way, the network administrator will obtain the current latest network topology data in time.

The network topology data includes:
for the LSP layer, the network topology data reported by the network elements to the network management system includes but is not limited to local node ID, local node address, local LSR ID, local LSR address, service layer connection point ID corresponding to the local node, neighbor node ID, neighbor node address, neighbor LSR ID, neighbor LSR address, and service layer connection point ID corresponding to the neighbor node;
if there are one or more connections currently, for each of the connections, the network topology data further includes at least one of LSP ID, local LSR ID, neighbor LSR ID and label;
if there is a link protection mechanism, for each of the link protections, the network topology data includes at least one of protected group ID, working LSP ID, protected LSP ID, neighbor LSR ID in the protected group, protection type, and current protection condition.

For the PW layer, the network topology data reported by the network elements to the network management system includes but is not limited to IDs of a node and its neighbor nodes, addresses of the node and its neighbor nodes, local and neighbor PE router IDs, local and neighbor PE router addresses, and service layer connection point ID corresponding to the local and neighbor nodes;
if there are one or more connections currently, for each of the connections, the network topology data further includes at least one of PW ID, local PE ID and neighbor PE ID.

Step 103: the network management system judges whether the current network topology is changed, and if it is changed, updates the local network topology data with the network topology data.

The network management system judges whether the obtained network topology data is consistent to the locally stored corresponding network topology data according to the obtained network topology data reported actively or reported on-query by each network element, if not, updates the locally stored corresponding network topology data with the obtained network topology data, that is, replaces the locally stored corresponding network topology data with the network topology data reported by network elements.

Step 104: the network management system outputs the latest local network topology data to the network administrator.

When the user selects the topology view function in the function menus of the network management system, the network management system opens the view window, and presents the latest local MPLS-TP network topology data to the network administrator, so as to facilitate monitoring of the network topology view of each layer by the network administrator.

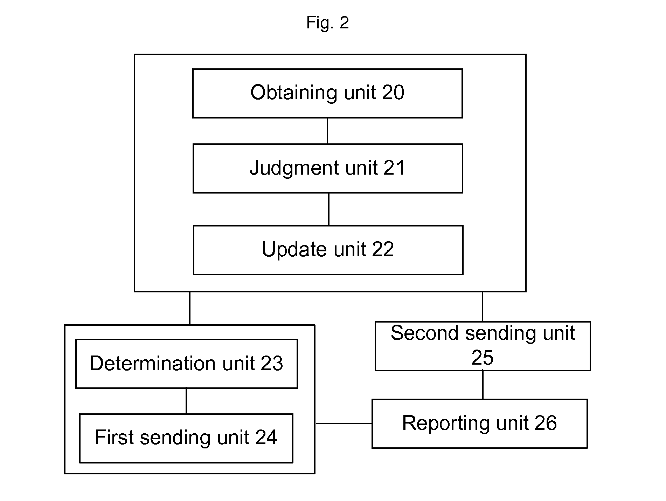

Fig. 2 is a structure schematic view of a system for updating a network topology in an MPLS system according to the disclosure. As shown in Fig. 2, the system for updating the network topology in the MPLS system according to the disclosure includes an obtaining unit 20, a judgment unit 21 and an update unit 22, wherein the obtaining unit 20 is configured to obtain network topology data from a node; the judgment unit 21 is configured to judge whether the current topology is changed, and to trigger the update unit when it is changed; and the update unit 22 is configured to update the local network topology data in the network management system with the network topology data.

As shown in Fig. 2, the system for updating the network topology in the MPLS system according to the disclosure further includes a determination unit 23 and a first sending unit 24; wherein, the determination unit 23 is configured to determine whether the network topology is changed, and to trigger the first sending unit 24 when it is changed; and the first sending unit 24 is configured to send the current network topology data of the nodes to the obtaining unit 20.

The changing of the network topology includes:
a new node accessing the network or decreasing of the number of the nodes in the network; or
increasing of the connections, a connection being deleted in the network or changing of routing information; or
changing of the type or state of the protected links in the network.

As shown in Fig. 2, the system for updating the network topology in the MPLS system according to the disclosure further includes a second sending unit 25 and a reporting unit 26; wherein, the second sending unit 25 is configured to send a query request for network topology data to the nodes; the reporting unit 26 is configured to report the current network topology data of the nodes according to the query request.
the network topology data includes at least one of the following data:
local node ID, local node address, local LSR ID, local LSR address, service layer connection point ID corresponding to the local node, neighbor node ID, neighbor node address, neighbor LSR ID, neighbor LSR address, and service layer connection point ID corresponding to the neighbor node; or
LSP ID, local LSR ID, neighbor LSR ID, and label; or
protected group ID, working LSP ID, protected LSP ID, neighbor LSR ID in the protected group, protection type, and current protection condition.
the network topology data includes at least one of the following data:
local node ID, local node address, local PE router ID, local PE router address, service layer connection point ID corresponding to the local node, neighbor node ID, neighbor node address, neighbor PE router ID, neighbor PE router address, and service layer connection point ID corresponding to the neighbor node; or
PW ID, local PE ID, and neighbor PE ID.

As the skilled in the art should appreciate, the system for updating the network topology in the MPLS system as shown in Fig. 2 is designed to implement the foregoing method for updating the network topology in the MPLS system, functions of each processing unit in the system as shown in Fig. 2 can be understood with reference to relevant descriptions of the method for updating the network topology in the MPLS system, and, functions of each of the processing units can be implemented by programs run on a processor, and also can be implemented by specific logic circuits. As the skilled in the art should appreciate, in Fig. 2, except for the obtaining unit 20, the judgment unit 21 and the update unit 22, all other processing units are not essential technical features for implementing the basic purpose of the disclosure.

The above are just preferred embodiments of the disclosure and are not intended to limit the protection range of the disclosure.

## Claims

1. A method for updating a network topology in a multi-protocol label switching system, comprising:
a network management system obtaining network topology data from a node, then judging whether the current network topology is changed, and updating local network topology data with the network topology data when the current network topology is changed.

2. The method according to claim 1, wherein the network management system obtaining the network topology data from the node comprises:
the node, when determining that the network topology is changed, sending its own current network topology data to the network management system.

3. The method according to claim 2, wherein the change of the network topology comprises:
a new node accessing the network, or decreasing of a number of nodes in the network; or
increasing or deleting of a connection in the network, or changing of routing information; or
changing of type or state of a protected link in the network.

4. The method according to claim 1, wherein the network management system obtaining the network topology data from the node comprises:
the network management system sending a query request for the network topology data to the node, and the node reporting its own current network topology data in response to the query request.

5. The method according to any one of claims 2 to 4, wherein the network topology data comprises at least one of the following data: local node identification (ID), local node address, local label switching router (LSR) ID, local LSR address, service layer connection point ID corresponding to the local node, neighbor node ID, neighbor node address, neighbor LSR ID, neighbor LSR address, and service layer connection point ID corresponding to the neighbor node; or
the network topology data comprises at least one of the following data: label switching path (LSP) ID, local LSR ID, neighbor LSR ID, and label; or
the network topology data comprises at least one of the following data: protected group ID, working LSP ID, protected LSP ID, neighbor LSR ID in the protected group, protection type, and current protection condition.

6. The method according to any one of claims 2 to 4, wherein the network topology data comprises at least one of the following data: local node ID, local node address, local provider edge (PE) router ID, local PE router address, service layer connection point ID corresponding to the local node, neighbor node ID, neighbor node address, neighbor PE router ID, neighbor PE router address, and service layer connection point ID corresponding to the neighbor node; or
the network topology data comprises at least one of the following data: pseudowire (PW) ID, local PE ID, and neighbor PE ID.

7. A system for updating a network topology in a multi-protocol label switching system, comprising an obtaining unit, a judgment unit and an update unit, wherein
the obtaining unit is configured to obtain network topology data from a node;
the judgment unit is configured to judge whether the current network topology is changed, and to trigger the update unit when the current network topology is changed; and
the update unit is configured to update local network topology data in the network management system with the network topology data.

8. The system according to claim 7, further comprising a determination unit and a first sending unit; wherein
the determination unit is configured to determine whether the network topology is changed, and to trigger the first sending unit when the network topology is changed; and
the first sending unit is configured to send the current network topology data of the node to the obtaining unit.

9. The system according to claim 8, wherein the change of the network topology includes:
a new node accessing the network or decreasing of a number of nodes in the network; or
increasing or deleting of a connection in the network, or changing of routing information; or
changing of type or state of a protected link in the network.

10. The system according to claim 7, further comprising a second sending unit and a reporting unit, wherein
the second sending unit is configured to send a query request for the network topology data to the node;
the reporting unit is configured to report the current network topology data of the node in response to the query request.

11. The system according to any one of claims 8 to 10, wherein the network topology data comprises at least one of the following data: local node identification (ID), local node address, local Label Switch Router (LSR) ID, local LSR address, service layer connection point ID corresponding to the local node, neighbor node ID, neighbor node address, neighbor LSR ID, neighbor LSR address, and service layer connection point ID corresponding to the neighbor node; or
the network topology data comprises at least one of the following data: label switching path (LSP) ID, local LSR ID, neighbor LSR ID, and label; or
the network topology data comprises at least one of the following data: protected group ID, working LSP ID, protected LSP ID, neighbor LSR ID in the protected group, protection type, and current protection condition.

12. The system according to any one of claims 8 to 10, wherein the network topology data comprises at least one of the following data: local node ID, local node address, local provider edge (PE) router ID, local PE router address, service layer connection point ID corresponding to the local node, neighbor node ID, neighbor node address, neighbor PE router ID, neighbor PE router address, and service layer connection point ID corresponding to the neighbor node; or
the network topology data comprises at least one of the following data: pseudowire (PW) ID, local PE ID, and neighbor PE ID.
